# EUROPÄISCHE PATENTSCHRIFT

(11) **EP 2 030 300 B1**
(45) Veröffentlichungstag und Bekanntmachung des Hinweises auf die Patenterteilung: **11.07.2012**
(21) Anmeldenummer: 07725043.9
(22) Anmeldetag: 10.05.2007
(51) Int. Cl.: H02J 5/00, H01F 38/14

(54) **ÜBERTRAGERKOPF UND ANLAGE**
TRANSMISSION HEAD AND INSTALLATION
TETE DE TRANSMISSION ET INSTALLATION ASSOCIEE

(30) Priorität: 30.05.2006 DE 102006025461
(43) Veröffentlichungstag der Anmeldung: 04.03.2009
(73) Patentinhaber: SEW-EURODRIVE GmbH & Co. KG, 76646 Bruchsal (DE)
(72) Erfinder: BECKER, Günter, 76684 Östringen (DE); SCHMIDT, Josef, 76676 Graben-Neudorf (DE); HABERMAAS, Martin, 68165 Mannheim (DE); SCHWESINGER, Klaus, 76646 Bruchsal (DE); PODBIELSKI, Leobald, 76199 Karlsruhe (DE)
(74) Vertreter: Tüngler, Eberhard
(86) Internationale Anmeldenummer: PCT/EP2007/004121
(87) Internationale Veröffentlichungsnummer: WO 2007/137682

(56) Entgegenhaltungen:
- EP-A- 0 357 829
- EP-A- 0 642 203
- WO-A-2004/084372
- WO-A-2005/020405
- DE-A1- 4 446 779
- DE-A1- 10 115 535
- DE-C1- 3 840 180
- GB-A- 1 199 256
- GB-A- 2 136 635
- US-A- 5 831 841
- US-A- 6 108 216

## Beschreibung

Die Erfindung betrifft einen Übertragerkopf und eine Anlage.

Aus der DE 44 46 779 C2 und der WO 92/17929 sind Verfahren und zur berührungslosen Energieübertragung bekannt, bei denen eine induktiv schwache Kopplung vorliegt.

Aus der GB 2136 635 A ist eine induktive energieübertragung an eine bewegbar angeordnete Sekundärwicklung bekannt, der ein Kondensator parallel zugeschaltet Ist und die mit dem Kondensator vergossen vorgesehen ist.

Aus der WO 2005/020405 A1 ist bekannt, die Außenseite eines Übertragerkopfes bei einer induktiven berührungslose Energieübertragung an ein bewegbares Teil mit Aluminiumplatten 43 abzuschirmen.

Der Erfindung liegt daher die Aufgabe zugrunde, eine Anlage mit geringem Aufwand herstellbar zu machen.

Erfingdungsgemäß wird die Aufgabe bei der nach dem Übertragerkopf nach den in Anspruch 1 und bei der Anlage nach den in Anspruch 11 angegebenen Merkmalen gelöst.

Wichtige Merkmale der Erfindung bei dem Übertragerkopf sind, dass Übertragerkopf für eine Anlage zur berührungslosen Energieübertragung, wobei das Gehäuse des Übertragerkopfes eine Sekundärspule samt deren Spulenkern umgibt sowie Kondensatoren zur Bildung einer elektrisch mit der Spule verbundenen Kapazität, wobei der Spulenkern aus Ferrit ausgeführt ist, wobei er aus einer Vielzahl von Ferritteilen zusammengesetzt ist,
wobei eine, zwei oder mehr Sorten von Ferritteilen verwendet sind Innerhalb des Gehäuses,
wobei die Spulenwicklung oder Spulenwicklungen den Spulenkern umgeben und an der äußeren Oberfläche der Spule Ferritplatten zur Verminderung des Streufeldes vorgesehen sind.

Von Vorteil ist dabei, dass der Übertragerkopf als Einheit montierbar ist und eine gemeinsame Entwärmung der Bauteile vorsehbar ist. Außerdem ist nur ein Gehäuse für alle Bauteile notwendig und diese sind kompakt anordenbar und isolierbar. Weiter wesentlicher Vorteil ist aber auch, dass die auftretenden großen Spannungen, insbesondere beim Reihenschwingkreis, oder großen Ströme, insbesondere beim Parallelschwingkreis, einfach beherrschbar sind und es vermieden wird lange elektrische Leitungen zwischen der Induktivität und der Kapazität zu verlegen, was aufwendig und kostspielig wäre sowie erhöhte Abstrahlungen und Verluste zur Folge hätte. Außerdem wird zum Verbraucher hin nur eine Anschlussleitung vorgesehen, die den Verbraucherstrom und die Verbraucherspannung übertragen muss. Höhere Ströme oder Spannungen, die nur innerhalb oder wegen des parallelen oder seriellen Schwingkreises auftreten, bleiben räumlich innerhalb des Übertragerkopfes. Somit sind die zugehörigen technischen Mittel, wie Stromschienen für Starkstrom und/oder Isoliermittel für hohe Spannungen, innerhalb des Übertragerkopfes, also auf räumlich eng begrenztem Bereich angeordnet. Somit sind die Mittel kompakt ausführbar. Außerdem ist das Gehäuse des Übertragerkopfes zur Isolierung und als Berührschutz mit verwendbar. Des Weiteren ist die Verdrahtung, also die elektrischen Verbindungen und Verbindungsstellen, mit Ausnahme der Anschlussleitung vorsehbar auf diesem räumlich eng begrenzten Gebiet.

Bei einer vorteilhaften Ausgestaltung sind im Übertragerkopf zumindest eine Induktivität und Kapazität als Schwingkreis, insbesondere Parallel- oder Reihen-Schwingkreis, vorgesehen, wobei die Resonanzfrequenz der Mittelfrequenz des Primärstromes im Wesentlichen entspricht. Von Vorteil ist dabei, dass die elektromagnetischen Abstrahlungen und der Aufwand für elektrische Verbindungen verringerbar ist.

Bei einer vorteilhaften Ausgestaltung ist das Gehäuse aus Gehäuseteilen zusammengesetzt, insbesondere dicht, lösbar verbindbar und/oder in hoher Schutzart. Von Vorteil ist dabei, dass der Übertragerkopf auch in feuchter Umgebung oder nasser Umgebung oder sogar Wasser-Umgebung einsetzbar ist. Durch Vergussmasse innerhalb des Übertragekropfes lässt sich eine noch höhere Dichtigkeit und bessere mechanische Stabilität erreichen.

Bei einer vorteilhaften Ausgestaltung ist der Spulenkern aus Ferrit ausgeführt, insbesondere aus einer Vielzahl von Ferritteilen zusammengesetzt ist, insbesondere gleichen Ferritteilen. Von Vorteil ist dabei, dass verschiedene Spulenkerne aus stets denselben Teilen herstellbar sind.. Es ist also eine ganze Baureihe von Spulenkernen oder entsprechend Übertragerköpfen herstellbar, wobei nur eine oder wenige Sorten von teilen bevorratet werden muss. Die somit hohe erreichbare Varianz innerhalb eines solchen Baukastens benötigt trotzdem nur ein geringes Lagervolumen und entsprechend geringen Aufwand und Kostenbedarf.

Bei einer vorteilhaften Ausgestaltung sind eine, zwei oder mehr Sorten von Ferritteilen verwendet innerhalb des Gehäuses. Von Vorteil ist dabei, dass eine hohe Varianz im Baukasten unter geringem Aufwand herstellbar ist.

Bei einer vorteilhaften Ausgestaltung umfasst der Übertragerkopf eine elektrische Verbindung zu einem Verbraucher, welcher aus dem Übertragerkopf mit Energie versorgbar ist. Von Vorteil ist dabei, dass nur eine einzige Anschlussleitung nach außen zum Verbraucher hin notwendig ist. Somit sind die weiter notwendigen Verbindungsmittel und Verbindungen innerhalb des Übertragerkopfes vorsehbar und mit der Vergussmasse und/oder dem Gehäuse schützbar, isolierbar und mechanisch festlegbar.

Bei einer vorteilhaften Ausgestaltung sind Kondensatoren auf mindestens einer Leiterplatte angeordnet, deren Leiterbahnen elektrisch mit der Sekundärspule verbunden sind. Von Vorteil ist dabei, dass die Verbindungen in einfacher und kostengünstiger Weise herstellbar sind.

Bei einer vorteilhaften Ausgestaltung umgeben die Spulenwicklung oder Spulenwicklungen den Spulenkern und an der äußeren Oberfläche der Spule sind Ferritplatten vorgesehen. Von Vorteil ist dabei, dass eine Verminderung des Streufeldes und somit eine Verbesserung des Wirkungsgrades erreichbar ist.

Bei einer vorteilhaften Ausgestaltung ist der Spulenkern U-förmig, C-förmig oder E-förmig ausgeführt, insbesondere mit an ihrem Ende verbreiterten Schenkeln des U, E oder C. Von Vorteil ist dabei, dass die Erfindung bei verschieden ausführbaren Spulenkernen und somit auch bei verschiedenen Arten der Anordnung der Primärleiter, wie sie beispielhaft in der DE 44 46 779 C2 und der WO 92/17929 gezeigt sind, anwendbar ist. Bei der ersteren ist ein Hinleiter ungefähr im Inneren des U vorgesehen. Bei einem E-förmigen Kern ist im Beriech der ersten beiden Schenkel ein Hinleiter und im Bereich der letzten beiden Schenkel ein Rückleiter vorsehbar.

Bei einer vorteilhaften Ausgestaltung ist zwischen Leiterplatte und Spulenkern ein Isolierkörper vorgesehen. Von Vorteil ist dabei, dass eine räumlich sehr kompakte Anordnung ausführbar ist.

Bei einer vorteilhaften Ausgestaltung ist die Sekundärspule aus Teilwicklungen zusammengesetzt, welche jeweils mit einer zugehörigen Kapazität als Reihenschwingkreis ausgeführt sind, wobei die Resonanzfrequenz der Mittelfrequenz des Primärstromes im Wesentlichen entspricht. Von Vorteil ist dabei, dass bei dem Reihen-Schwingkreis die auftretenden Spannungen reduzierbar sind im Vergleich zur Ausführung des Übertragerkopfes mit nur einer einzigen Induktivität und einer einzigen Kapazität. Bei analoger Ausführung mit Parallelschwingkreis, der aus parallel geschaltete Schwingkreise aus jeweiligen Teilwicklungen und zugehörigen, entsprechend abgestimmten Kapazitäten zusammengesetzt ist, lassen sich entsprechend Ströme reduzieren.

Bei einer vorteilhaften Ausgestaltung umfasst der Übertragerkopf eine Reihenschaltung der Reihenschwingkreise, umfassend jeweilige Teilwicklung und jeweils zugehörige Kapazität. Von Vorteil ist dabei, dass die auftretenden Spannungen innerhalb des Übertragerkopfes reduzierbar sind und somit eine einfachere Isolierung ausführbar ist.

Wichtige Merkmale bei der Anlage sind, dass ein vorbeschriebener Übertragerkopf entlang eines langgestreckten Primärleiters verfahrbar vorgesehen ist. Von Vorteil ist dabei, dass eine besonders kompakte Anlage vorsehbar ist, bei der aus einer Einspeisung ein Primärleitersystem speisbar ist, aus dem bewegbar angeordnete Verbraucher berührungslos über eine schwache induktive Kopplung, also auch großen Luftspalt, versorgbar ist.

Weitere Vorteile ergeben sich aus den Unteransprüchen.

### Bezugszeichenliste

- 1: Gehäuse
- 2: seitliche Ferritlage
- 3: U-förmiger Ferritkern
- 4: Isolierung
- 5: Leiterplatte
- 6: Kondensatoren
- 7: Dichtung
- 8: Gehäuseplatte
- 9: Schrauben
- 10: Anschlussleitung
- 11: Kabelverschraubung
- 12: Verschraubung
- 13: Steckverbindergehäuseteil
- 14: Steckverbinderunterteil

Die Erfindung wird nun anhand von Abbildungen näher erläutert:

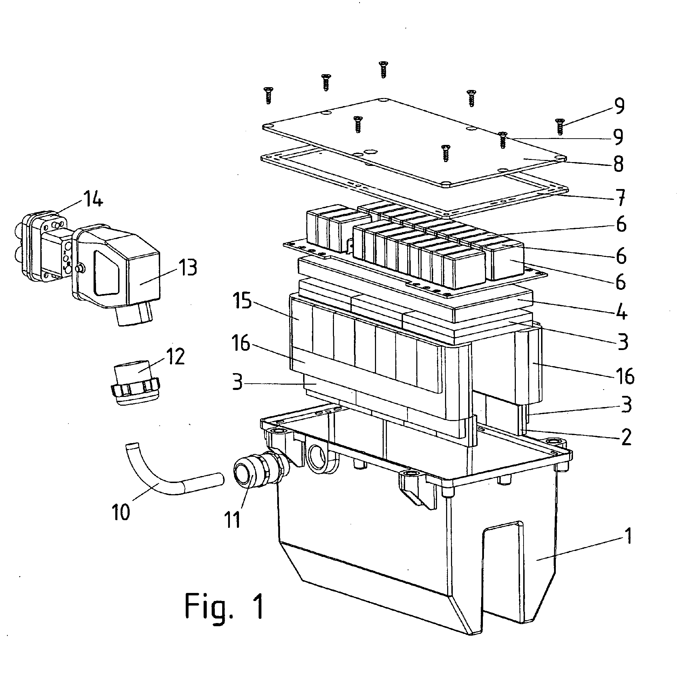

In der Figur 1 ist eine erfindungsgemäße Vorrichtung in Explosionsdarstellung gezeichnet.

Dabei handelt es sich um einen sogenannten Übertragerkopf, der beispielhaft an einem Verbraucher anbringbar ist. Der Verbraucher ist längs einem Primärleiter bewegbar angeordnet, wobei von einer Einspeisung in den Primärleiter ein mittelfrequenter Wechselstrom eingeprägt wird. Die Einspeisung ist vorzugsweise als Stromquelle ausgeführt.

Im Übertragerkopf ist die zugehörige Sekundärwicklung, welche induktiv an den Primärleiter koppelbar ist, vorgesehen. Die Kopplung ist schwach, also über einen großen Luftspalt, ausgeführt. Damit aber trotzdem ein hoher Wirkungsgrad beim berührungslosen Übertragen der elektrischen Leistung vom Primärleitersystem an die Sekundärspule erfolgen kann, ist der Sekundärspule eine Kapazität derart in Serie beschaltet, dass der zugehörige Schwingkreis eine Resonanzfrequenz aufweist, die im Wesentlichen der Mittelfrequenz entspricht.

Der Übertragerkopf weist ein isolierendes Gehäuse 1 auf, das vorzugsweise aus Kunststoff ausgeführt ist. Dieses umgibt den U-förmigen Ferritkern 3 und die diesen umgebende Sekundärwicklung 16, auf deren Äußerem Ferritkerne 15 vorgesehen sind zur Reduzierung der Streufelder. Der Ferritkern weist auch eine seitliche Ferritlage 2 auf, die nach innen gerichtet ist und den Wirkungsgrad weiter verbessert.

Das Gehäuse 1 ist derart ausgeführt, dass ein Isolierabstand zu den Strom führenden Teilen des Übertragerkopfes eingehalten wird, auch wenn ein Mensch oder eine meatllische Komponente in Berührungskommt mit dem Gehäuse 1. Somit ist das Gehäuse 1 aus elektrisch isolierendem Stoff ausgeführt, garantiert einen Isolationsabstand bei Berührung und führt eine Gehäusefunktion in hoher Schutzart aus, also auch abgedichtet gegen Spritzwasser oder sogar anstehendes Wasser,

Die gesamte Anordnung aus Ferritkernen und Wicklung ist innerhalb des Gehäuses 1 vorgesehen. Zwischen der Leiterplatte 5 und dem U-förmigen Ferritkern 3 ist eine, Isolierung 4 vorgesehen. Auf der Leiterplatte 5 sind Kondensatoren 6 vorgesehen, die die genannte Kapazität bilden, welche der Induktivität der Sekundärspule in Reihe geschaltet ist.

Mittels der Dichtung 7 ist die Gehäuseplatte 8 unter Verwendung von Schrauben 9 auf das Gehäuse 1 aufschraubbar und dicht verbindbar. Bei meatllischer Ausführung der Gehäuseplatte, insbeosndere aus Aluminium, ist eine besonders gute Wärmeabfuhr erreichbar. Dabei wird die Wärme an das Befestigungsgestänge oder an die Befestigungskomponente des Verbrauchers abgeführt beziehungsweise an dessen Fahrwagen. Bei der Bewegung wird auch der Kühlluftstrom kühlend wirksam am Gehäuse 1. Auch über dieses Gehäuse geht ein kleiner Wärmestrom an die Umgebungsluft. Die wesentliche Entwärmung wird aber über die Gehäuseplatte und die mit dieser verbundene Befestigungskomponente erreicht.

Am Gehäuse 1 ist auch eine Kabelverschraubung 11 zur Durchführung der Anschlussleitung 10 vorgesehen, die über die Verschraubung 12 ins Steckverbindergehäuseteil 13 geführt ist und mit Anschlussvorrichtungen des Steckverbinderunterteils 14 verbunden ist. Somit ist ein Verbraucher, wie Elektromotor oder elektronische Schaltung, versorgbar.

Der U-förmige Ferritkern 3 ist aus einer Vielzahl kleiner Ferritplatten zusammengesetzt. Somit ist die Fertigung verschiedener geometrischer Dimensionen und Ausformungen einfach, kostengünstig und schnell möglich.

Bei weiteren erfindungsgemäßen Ausführungsbeispielen ist die Kapazität parallel statt in Reihe zur Induktivität der Sekundärspule ausgeführt.

Bei weiteren erfindungsgemäßen Ausführungsbeispielen ist Wicklung der Sekundärspule aus Teilwicklungen zusammengesetzt, wobei jeder Teilwicklung eine Kapazität in Serie nachgeschaltet ist zur Reduzierung der auftretenden Spitzenspannung an den Sekundärspulenanschlüssen, also auch in der Anschlussleitung 10. Somit fließt der Sekundärstrom über die erste Teilwicklung und dann in die zugeordnete erste Kapazität. Danach fließt er über die zweite Teilwicklung und dann in die zugeordnete zweite Kapazität. Dies wird bis zu letzten Kapazität fortgesetzt. Jede Induktivität und die zugeordnete Kapazität sind dabei derart dimensioniert, dass die zugehörige Resonanzfrequenz im Wesentlichen der Mittelfrequenz entspricht. Die Leiterplatte ist besonders gut geeignet, um die Verbindungen zwischen den Teilwicklungen und den Kondensatoren auszuführen in einfacher und kostengünstiger Weise. Auf diese Weise sind auch Spitzenspannungen reduzierbar und eine hohe Integrationsdiechte im Übertragerkopf realisierbar, da die Spannungsabstände zwishcen den Strom führenden Teilen gering wählbar sind. Der Fertigungsaufwand ist nicht erhöht, da die Vielzahl von Kondensatoren automatisiert auf der Leiterplatte bestückbar sind.

Bei weiteren erfindungsgemäßen Ausführungsbeispielen ist eine der Kapazitäten oder die Kapazität durch Reihen- und/oder Parallelschaltung mehrerer Kondensatoren realisiert.

Bei weiteren erfindungsgemäßen Ausführungsbeispielen ist statt des U-förmigen Ferritkerns auch ein E-förmiger oder ein C-förmiger oder ein anders geformter Ferritkern verwendbar.

## Patentansprüche

1. Übertragerkopf für eine Anlage zur berüftrungslosen Energieübertragung, wobei
das Gehäuse (1) des Übertragerkopfes eine Sekundärspule (16) samt deren Spulenkern (3) umgibt sowie Kondensatoren (6) zur Bildung einer elektrisch mit der Spule verbundenen Kapazität,
**dadurch gekennzeichnet, dass** der Spulenkern (3) aus Ferrit ausgeführt ist, wobei er aus einer Vielzahl von Ferritteilen zusammengesetzt ist,
wobei eine, zwei oder mehr Sorten von Ferritteilen verwendet sind Innerhalb des Gehäuse (1),
wobei die Spulenwicklung oder Spulenwicklungen den Spulenkern (3) umgeben und an der äußeren Oberfläche der Spule Ferritplatten (15) zur Verminderung des Streufeldes vorgesehen sind.

2. Übertragerkopf nach mindestens einem der vorangegangenen Ansprüche,
**dadurch gekennzeichnet, dass**
im Übertragerkopf zumindest eine Induktivität und Kapazität als Schwingkreis, insbesondere Parallel- oder Reihen-Schwingkreis, vorgesehen sind, wobei die Resonanzfrequenz der Mittelfrequenz des Primärstromes im Wesentlichen entspricht.

3. Übertragerkopf nach mindestens einem der vorangegangenen Ansprüche,
**dadurch gekennzeichnet, dass**
das Gehäuse (1) aus Gehäuseteilen zusammengesetzt ist, insbesondere dicht, lösbar verbindbar und/oder in hoher Schutzart.

4. Übertragerkopf nach mindestens einem der vorangegangenen Ansprüche,
**dadurch gekennzeichnet, dass**
innerhalb einer Sorte jeweils gleiche Ferritteile verwendet sind.

5. Übertragerkopf nach mindestens einem der vorangegangenen Ansprüche,
**dadurch gekennzeichnet, dass**
der Übertragerkopf eine elektrische Verbindung zu einem Verbraucher umfasst, welcher aus dem Übertragerkopf mit Energie versorgbar ist.

6. Übertragerkopf nach mindestens einem der vorangegangenen Ansprüche,
**dadurch gekennzeichnet, dass**
Kondensatoren (6) auf mindestens einer Leiterplatte (5) angeordnet sind, deren Leiterbahnen elektrisch mit der Sekundärspule verbunden sind.

7. Übertragerkopf nach mindestens einem der vorangegangenen Ansprüche,
**dadurch gekennzeichnet, dass**
der Spulenkern (3) U-förmig, C-förmig oder E-förmig ausgeführt ist, insbesondere mit an ihrem Ende verbreiterten Schenkeln des U, E oder C.

8. Übertragerkopf nach mindestens einem der vorangegangenen Ansprüche,
**dadurch gekennzeichnet, dass**
zwischen Leiterplatte (5) und Spulenkern (3) ein Isolierkörper (4) vorgesehen ist.

9. Übertragerkopf nach mindestens einem der vorangegangenen Ansprüche,
**dadurch gekennzeichnet, dass**
die Sekundärspule aus Teilwicklungen zusammengesetzt ist, welche jeweils mit einer zugehörigen Kapazität als Reihenschwingkreis ausgeführt sind, wobei die Resonanzfrequenz der Mittelfrequenz des Primärstromes im Wesentlichen entspricht.

10. Übertragerkopf nach mindestens einem der vorangegangenen Ansprüche,
**dadurch gekennzeichnet, dass**
der Übertragerkopf eine Reihenschaltung der Reihenschwingkreise, umfassend Teilwicklung und jeweils zugehörige Kapazität, umfasst.

11. Anlage mit einem Übertragerkopf nach mindestens einem der vorangegangenen Ansprüche,
**dadurch gekennzeichnet, dass**
der Übertragerkopf entlang eines langgestreckten Primärleiters verfahrbar vorgesehen ist.

## Claims

1. A transmission head for an installation for contact-less energy transmission, the housing (1) of the transmission head surrounding a secondary coil (16) and the coil core (3) thereof and capacitors (6) for the formation of a capacitance which is electrically connected to the coil,
**characterised in that** the coil core (3) is made of ferrite, it being composed of a plurality of ferrite parts,
one, two or more sorts of ferrite parts being used within the housing (1),
the coil winding or coil windings surrounding the coil core (3) and ferrite plates (15) being provided on the outer surface of the coil for reducing the stray field.

2. A transmission head according to at least one of the preceding claims, **characterised in that** at least one inductance and capacitance are provided in the transmission head as resonant circuit, in particular parallel or series resonant circuit, the resonant frequency corresponding substantially to the medium frequency of the primary current.

3. A transmission head according to at least one of the preceding claims, **characterised in that** the housing (1) is composed of housing parts, in particular hermetically, detachably connectably and/or in a high type of protection.

4. A transmission head according to at least one of the preceding claims, **characterised in that** in each case identical ferrite parts are used within one sort.

5. A transmission head according to at least one of the preceding claims, **characterised in that** the transmission head comprises an electrical connection to a consumer which can be supplied with energy from the transmission head.

6. A transmission head according to at least one of the preceding claims, **characterised in that** capacitors (6) are arranged on at least one printed circuit board (5), the printed conductors of which are electrically connected to the secondary coil.

7. A transmission head according to at least one of the preceding claims, **characterised in that** the coil core (3) is U-shaped, C-shaped or E-shaped, in particular with arms of the U, E or C which are widened at their ends.

8. A transmission head according to at least one of the preceding claims, **characterised in that** an insulating body (4) is provided between the printed circuit board (5) and coil core (3).

9. A transmission head according to at least one of the preceding claims, **characterised in that** the secondary coil is composed of partial windings which are each formed with an associated capacitance as series resonant circuit, the resonant frequency substantially corresponding to the medium frequency of the primary current.

10. A transmission head according to at least one of the preceding claims, **characterised in that** the transmission head comprises a series connection of the series resonant circuits, comprising partial winding and associated capacitance in each case.

11. An installation with a transmission head according to at least one of the preceding claims, **characterised in that** the transmission head is provided to be movable along an elongate primary conductor.

## Revendications

1. Tête de transmission pour une installation de transmission d'énergie sans contact, le boîtier (1) de la tête de transmission entourant une bobine secondaire (16), y compris son noyau de bobine (3), ainsi que des condensateurs (6) destinés à former une capacitance électriquement reliée à la bobine,
**caractérisée en ce que** le noyau de bobine (3) est réalisé en ferrite, sachant qu'il est composé d'une pluralité d'éléments en ferrite,
sachant qu'un, deux ou davantage de types d'éléments en ferrite sont utilisés dans le boîtier (1),
sachant que le bobinage ou les bobinages entourent le noyau de bobine (3) et que des plaques en ferrite (15) sont prévues sur la surface extérieure de la bobine pour réduire le champ de fuites.

2. Tête de transmission selon la revendication précédente, **caractérisée en ce qu'**il est prévu dans la tête de transmission au moins une inductance et une capacitance sous forme de circuit oscillant, en particulier de circuit oscillant parallèle ou de circuit oscillant série, sachant que la fréquence de résonance correspond sensiblement à la fréquence moyenne du courant primaire.

3. Tête de transmission selon au moins une des revendications précédentes, **caractérisée en ce que** le boîtier (1) est composé de parties de boîtier, en particulier pouvant être assemblées de manière étanche et amovible et/ou avec un degré de protection élevé.

4. Tête de transmission selon au moins une des revendications précédentes, **caractérisée en ce qu'**on utilise dans chaque type des éléments de ferrite respectifs identiques entre eux.

5. Tête de transmission selon au moins une des revendications précédentes, **caractérisée en ce que** la tête de transmission comprend une liaison électrique vers un consommateur électrique qui peut être alimenté en énergie à partir de la tête de transmission.

6. Tête de transmission selon au moins une des revendications précédentes, **caractérisée en ce que** les condensateurs (6) sont disposés sur au moins une carte imprimée (5) dont les pistes conductrices sont électriquement reliées à la bobine secondaire.

7. Tête de transmission selon au moins une des revendications précédentes, **caractérisée en ce que** le noyau de bobine (3) est réalisé en forme de U, en forme de C ou en forme de E, en particulier avec des branches du U, du E ou du C élargies à leur extrémité.

8. Tête de transmission selon au moins une des revendications précédentes, **caractérisée en ce qu'**un corps isolant (4) est prévu entre la carte imprimée (5) et le noyau de bobine (3).

9. Tête de transmission selon au moins une des revendications précédentes, **caractérisée en ce que** la bobine secondaire est composée de bobinages partiels qui sont chacun réalisés avec une capacitance associée sous forme de circuit oscillant série, sachant que la fréquence de résonance correspond sensiblement à la fréquence moyenne du courant primaire.

10. Tête de transmission selon au moins une des revendications précédentes, **caractérisée en ce que** la tête de transmission comprend un montage en série des circuits oscillants série, constitués d'un bobinage partiel et de la capacitance respectivement associée.

11. Installation pourvue d'une tête de transmission selon au moins une des revendications précédentes, **caractérisée en ce que** la tête de transmission est prévue mobile le long d'un conducteur primaire s'étendant en longueur.
